(19)

**Europäisches Patentamt**
**European Patent Office**
**Office européen des brevets**

(11)  **EP 4 536 526 B1**

(12)  **EUROPEAN PATENT SPECIFICATION**

(45) Date of publication and mention
of the grant of the patent:
**25.03.2026  Bulletin 2026/13**

(21) Application number: **22738336.1**

(22) Date of filing: **07.06.2022**

(51) International Patent Classification (IPC):
*B60W 30/188* (2012.01)   *B60W 10/08* (2006.01)
*B60W 10/184* (2012.01)   *B60T 8/17* (2006.01)
*B62D 53/00* (2006.01)   *B62D 59/04* (2006.01)
*B60L 15/38* (2006.01)

(52) Cooperative Patent Classification (CPC):
**B60W 10/184; B60L 7/18; B60L 7/26; B60L 15/38;**
**B60T 8/1708; B60W 10/08; B60W 30/188;**
**B62D 59/04;** B60L 2200/28; B60L 2200/36;
B60L 2240/12; B60W 2300/14; B60W 2710/083;
B60W 2710/182; B60Y 2200/147

(86) International application number:
**PCT/EP2022/065417**

(87) International publication number:
**WO 2023/237185 (14.12.2023 Gazette 2023/50)**

(54) **ACTUATOR CAPABILITY-DRIVEN CONTROL ALLOCATION IN MULTI UNIT VEHICLE COMBINATIONS**

AKTORFÄHIGKEITSGETRIEBENE STEUERZUWEISUNG BEI MEHREINHEITEN-FAHRZEUGKOMBINATIONEN

ATTRIBUTION DE COMMANDE PILOTÉE PAR CAPACITÉ D'ACTIONNEUR DANS DES COMBINAISONS DE VÉHICULES À UNITÉS MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.04.2025  Bulletin 2025/16**

(73) Proprietor: **VOLVO TRUCK CORPORATION**
**405 08 Göteborg (SE)**

(72) Inventors:
• **HANSSON, Axel**
 **431 38 MÖLNDAL (SE)**

• **ANDERSSON, Erik**
 **412 75 GÖTEBORG (SE)**
• **LAINE, Leo**
 **414 84 GÖTEBORG (SE)**

(74) Representative: **Kransell & Wennborg KB**
**P.O. Box 2096**
**403 12 Göteborg (SE)**

(56) References cited:
 CN-A- 105 867 168   DE-A1- 102016 220 905
 US-A1- 2017 129 558   US-B1- 6 419 037

## Description

### Technical field

The present invention relates to the field of control allocation in multi-unit vehicle combinations. In particular, the present invention relates to how such control allocation can be improved in terms of vehicle energy consumption.

### Background

Vehicle combinations include multiple vehicle units (such as tractor units, trucks, trailers, dollies, and similar) connected together using various couplings. Often, the tractor unit (or truck) is the only unit which includes actuators for propelling the vehicle combination, while actuators for braking the vehicle combination are normally distributed among all or several of the vehicle units. If using electric motors for propulsion, the tractor unit normally has either a central motor providing power to all driving wheels, separate motors for each driving axles, or e.g. separate motors for each of the driving wheels.

An envisaged future approach is however to provide electric motors also on the vehicle units towed by the tractor unit, and to e.g. equip also these units with batteries to extend the range of the vehicle combination. This will enable the otherwise passive vehicle units to help propelling the vehicle combination when needed. With such an approach, a problem arises in that there will often be more actuators (e.g. motors and service brakes) available than a desired number of different forces and moments which these actuators are to produce in order to create a desired motion of the vehicle combination as a whole. Consequently, there exist multiple solutions for how each actuator can contribute to the force and moment generation of the vehicle combination. To solve such an underdetermined system, resulting from an over-actuated system wherein the number of actuators exceeds the desired controllable degrees of freedom, one may have to resort to solving an optimization problem.

A known way of solving such an optimization problem is to implement and use so-called control allocation, which attempts to find an optimal control input $u$ to the actuators (i.e. how the actuators should be controlled) which satisfies a virtual control input $v$ (i.e. the requested overall forces/moments of the vehicle combination as a whole).

Many solutions are available for solving such control allocation problems. However, the solution $u$ to the control allocation problem may vary depending on how the various parameters of the problem are defined, such as e.g. the various weighting matrices, the efficiency matrix, and e.g. gamma-factor (if solving a weighted least square problem). For vehicle combinations with multiple vehicle units in particular, some solutions may, even though they produce the requested forces/moments of the vehicle combination as a whole, be less than optimal from an energy efficiency point-of-view and result in e.g. some actuators ending up generating forces/moments which counteract forces/moments generated by other actuators, or even one or more vehicle units ending up generated longitudinal forces which counteract those of one or more other vehicle units.

DE 10 2016 220905 A1 discloses a vehicle, e.g. tractor in agriculture, comprising an analysis unit detecting drive force difference between the vehicle and a trailer and intervening in the control of drive units of the vehicle and of the trailer.

There is therefore a need for an improved way of performing control allocation in a vehicle combination including multiple vehicle units.

### Summary

To at least partially satisfy the above-identified need, the present invention provides an improved method of control allocation in a vehicle combination, a controller for performing such a method, a vehicle unit, a vehicle combination, and a computer program and a computer program product as defined by the accompanying independent claims. Various embodiments of the improved method, controller, vehicle/vehicle combination and computer program/computer program product are defined by the accompanying dependent claims.

Generally herein, it is assumed that the vehicle combination includes multiple vehicle units and a plurality of actuators which are configured to generate propulsion and/or braking forces. It is further assumed that the (plurality of) actuators are distributed among the multiple vehicle units such that each vehicle unit has at least one actuator, which the vehicle unit can use to generate one or more forces/moments for the vehicle unit such that the vehicle unit may contribute to requested forces/moments of the vehicle combination as a whole.

According to a first aspect of the present invention, a method is provided. The method is a method of control allocation in a vehicle combination including multiple vehicle units and a plurality of actuators configured to generate propulsion and/or braking forces, wherein the plurality of actuators are distributed among the multiple vehicle units. The method includes receiving requested global forces $v$ for the vehicle combination as a whole. The method further includes solving a control allocation problem in an attempt to find a true control input $u$ for the plurality of actuators based on the requested global forces, including an attempt to minimize a difference between the true control input and a reference control input $u_{ref}$ for the plurality of actuators. The method also includes controlling the plurality of actuators based on the true control input $u$ such that each vehicle unit contributes to a longitudinal force of the vehicle combination (as) indicated in the requested global forces $v$. In particular, the method further includes defining the reference control input $u_{ref}$ such that: a) capabilities of the plurality of actuators to generate propulsion and/or braking force are taken into account, and b) if the control input matches the reference control input (i.e. if finding a solution $u$ which is equal to, or at least approximately equal to, $u_{ref}$), the contribution to the longitudinal force from one of the vehicle units does not counteract the contribution to the longitudinal force from any other one of the vehicle units. Phrased differently, the reference control input is such that it causes the vehicle units by which forces are generated to make equally signed contributions to the overall longitudinal force of the vehicle combination. The method may be performed/executed by processing circuitry of a controller/device, as will be described in more detail later herein.

Herein, that longitudinal forces generated by two vehicle units "counteract" means that the forces are opposite in direction and have finite magnitude. Likewise, "does not counteract" is to be interpreted such that the two forces are either in a same direction, or at least such that the two forces have substantially different magnitudes, where "substantially" in this case may be interpreted as e.g. one force having a magnitude corresponding to only 1-5% of the other, or similar. Preferably, the envisaged method defines the reference control input $u_{ref}$ such that the directions of all longitudinal forces produced by the vehicle units are all the same. One or more examples of how to define $u_{ref}$ in accordance with the envisaged method will be provided later herein.

As used herein, a "vehicle" or "vehicle combination" may e.g. be a heavy vehicle/vehicle combination, such as e.g. a utility vehicle/vehicle combination. A vehicle combination may e.g. include a towing unit (tractor unit or truck) and one or more towed units (such as one or more trailers). Other vehicle combinations are also envisaged, including e.g. combinations including one or more dollies or similar.

The present disclosure thus improves upon common available technology in that it takes the capabilities of the various actuators into account when defining the reference control input $u_{ref}$, and makes sure that this reference control input is such that it steers a solver used to solve the control allocation problem away from solutions in which longitudinal forces generated by separate vehicle units counteract each other. Phrased differently, the envisaged method includes defining the reference control input such that the solver is more likely to, within a limited number of iterations, arrive at a solution wherein the resulting true control input $u$ matches $u_{ref}$ and does not lead to counteracting vehicle unit forces. By knowing the capabilities of the actuators, e.g. each actuator's lower and upper capabilities to exert forces and moments on the vehicle unit it belongs to, the envisaged method feeds the solver with reference values of what the distribution of requested global forces to each unit should be in order to minimize a total energy waste when propelling or braking the vehicle combination.

In some embodiments of the method, defining the reference control input may further be such that if the true control input matches the reference control input (i.e. when the solver converges to a particular solution), there is no simultaneous braking and acceleration of a same vehicle unit of the multiple vehicle units. Phrased differently, the envisaged method uses the reference control input to make sure (or at least lower the possibly) that e.g. a vehicle unit does not end up trying to generate longitudinal force by braking with a front wheel while trying to propel the vehicle unit with a rear wheel, or similar.

In some embodiments of the method, defining the reference control input may further be such that if the true control input matches the reference control input, the (requested) longitudinal force (as indicated by the requested global forces $v$) of the vehicle combination is split as evenly among the multiple vehicle units subject to the capabilities of the actuators. Phrased differently, the (requested) longitudinal force of the vehicle combination is split as evenly as possible among the multiple vehicle units under the proviso that the capabilities of the actuators are not exceeded.

In some embodiments of the method, the method may further include defining a preset split-ratio of the longitudinal force of the vehicle combination among the multiple vehicle units. Defining the reference control input may further be such that if the true control input matches the reference control input, the requested longitudinal force of the vehicle combination is split among the multiple vehicle units in accordance with the preset split-ratio. A split-ratio may e.g. be defined by a vector $\lambda = [\lambda_1, \lambda_2, ..., \lambda_N]$, where $N$ is an integer corresponding to the total number of vehicle units in the combination, and where each term $\lambda_i$ indicates a percentage ($\lambda_i \in [0.0, 1.0]$) of the longitudinal force of the vehicle combination that is to be generated by the $i$:th vehicle unit, where the sum of all such $\lambda_i$-terms equals one. For example, if having a total of two vehicle units, the split-ratio may be e.g. $\lambda = [0.8, 0.2]$, $\lambda = [0.7, 0.3]$, $\lambda = [0.6, 0.4]$ or similar, if e.g. assuming that the actuators of the first vehicle unit are more capable than those of the second vehicle unit.

In some embodiments of the method, the plurality of actuators may include one or more electric machines and one or more service brakes. As used herein, an "electric machine" is for example an electric motor, or any other machine configured to convert electrical energy into mechanical energy in order to propel the vehicle. It is to be noted that such machines may, in some embodiments, also be configured to sometimes operate in the opposite way, i.e. to convert mechanical energy into electrical energy, and be used to e.g. (regeneratively) brake the vehicle if needed. If not stated to the contrary, the terms "electric machine" and "electric motor" (or just "motor") will be used interchangeably herein.

In some embodiments of the method, the one or more electric machines may be capable of generating both propulsion and braking force, as mentioned above. For example, an electric machine may be operated as a generator in order to regeneratively brake a wheel, wheel unit, wheel axis, or vehicle unit which the electric machine is otherwise configured to drive/propel, and thus reduce (or sometimes even eliminate) the need for dedicated service brakes, or at least reduce the wear of such service brakes.

According to a second aspect of the present invention a controller is provided. The controller is for control allocation in a vehicle combination including multiple vehicle units and a plurality of actuators configured to generate propulsion and/or braking forces, wherein the plurality of actuators are distributed among the multiple vehicle units. The controller includes processing circuitry configured to cause the controller to: receive requested global forces ($v$) for the vehicle combination as a whole; receive at least one indication of capabilities of the plurality of actuators to generate propulsion and/or braking force; solve a control allocation problem in an attempt to find a true control input ($u$) for the plurality of actuators based on the requested global forces, including an attempt to minimize a difference between the true control input and a reference control input ($u_{ref}$) for the plurality of actuators, and control the plurality of actuators based on the true control input such that each vehicle unit contributes to a longitudinal force of the vehicle combination indicated in the requested global forces. The processing circuitry is further configured such that it causes the controller to define the reference control input such that: a) the capabilities of the plurality of actuators to generate propulsion and/or braking force are taken into account, and b) if the true control input matches the reference control input, the contribution to the longitudinal force from one of the vehicle units does not counteract the contribution to the longitudinal force from any other one of the vehicle units. The controller is thus configured to perform e.g. the method of the first aspect.

In some embodiments of the controller, the processing circuitry may be further configured to cause the controller to perform any embodiment of the method as envisaged and disclosed herein.

According to a third aspect of the present invention, a vehicle unit is provided. The vehicle unit is configured to form part of a vehicle combination including multiple vehicle units and a plurality of actuators configured to generate propulsion and/or braking forces, wherein the plurality of actuators are distributed among the multiple vehicle units. For control allocation purposes, the vehicle unit includes the control of the second aspect (or any embodiment thereof).

According to a fourth aspect of the present invention, a vehicle combination is provided. The vehicle combination includes multiple vehicle units and a plurality of actuators configured to generate propulsion and/or braking forces, wherein the plurality of actuators are distributed among the multiple vehicle units. For control allocation purposes, the vehicle combination includes the controller of the second aspect (or any embodiment thereof).

In some embodiments of the vehicle combination, the plurality of actuators may include one or more electric machines and one or more service brakes.

In some embodiments of the vehicle combination, the one or more electric machines may be capable of generating both propulsion and braking force.

According to a fifth aspect of the present invention, a computer program is provided. The computer program is for control allocation in a vehicle combination including multiple vehicle units and a plurality of actuators configured to generate propulsion and/or braking forces, wherein the plurality of actuators are distributed among the multiple vehicle units. The computer program includes computer code that, when running on processing circuitry of a controller of the vehicle combination, causes the controller to: receive requested global forces ($v$) for the vehicle combination as a whole; receive at least one indication of capabilities of the plurality of actuators to generate propulsion and/or braking force; solve a control allocation problem in an attempt to find a true control input (u) for the plurality of actuators based on the requested global forces, including an attempt to minimize a difference between the true control input and a reference control input ($u_{ref}$) for the plurality of actuators, and control the plurality of actuators based on the true control input such that each vehicle unit contributes to a longitudinal force of the vehicle combination indicated in the requested global forces. The computer code is further such that it, when running on the processing circuitry of the controller, causes the controller to define the reference control input such that: a) the capabilities of the plurality of actuators to generate propulsion and/or braking force are taken into account, and b) if the true control input matches the reference control input, the contribution to the longitudinal force from one of the vehicle units does not counteract the contribution to the longitudinal force from any other one of the vehicle units. The computer code is thus configured such that it, when running on the controller, causes the controller to perform e.g. the method of the first aspect.

In some embodiments of the computer program, the computer code is further such that it, when running on the processing circuitry of the controller, causes the controller to perform any embodiments of the method envisaged and disclosed herein.

According to a sixth aspect of the present invention, a computer program product is provided. The computer program product includes the computer program of the fifth aspect, and a computer-readable storage medium on which the computer program is stored. In some embodiments of the computer program product, the storage medium may be non-transitory.

Other objects and advantages of the present invention will be apparent from the following detailed description, the drawings and the claims.

## Brief description of the drawings

Exemplifying embodiments will now be described below with reference to the accompanying drawings, in which:

Figures 1A and 1B schematically illustrate examples of multi-unit vehicle combinations, to which solutions of the present disclosure are applicable;

Figure 1C schematically illustrates an example of global and local forces for a vehicle combination according to Figures 1A and 1B;

Figure 2 schematically illustrates, in terms of functional blocks, a conventional way of control allocation in multi-unit vehicle combinations;

Figure 3A schematically illustrates, in terms of functional blocks, various embodiments of a method of control allocation according to the present disclosure;

Figure 3B schematically illustrates a flow of an embodiment of a method of control allocation according to the present disclosure, and

Figures 4A and 4B schematically illustrate various embodiments of a controller (for control allocation) according to the present disclosure.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the Figures, the (absolute or relative) sizes of elements and regions may be exaggerated or understated vis-à-vis their true values for illustrative purposes and, thus, are provided to illustrate the general structures of the embodiments.

## Detailed description

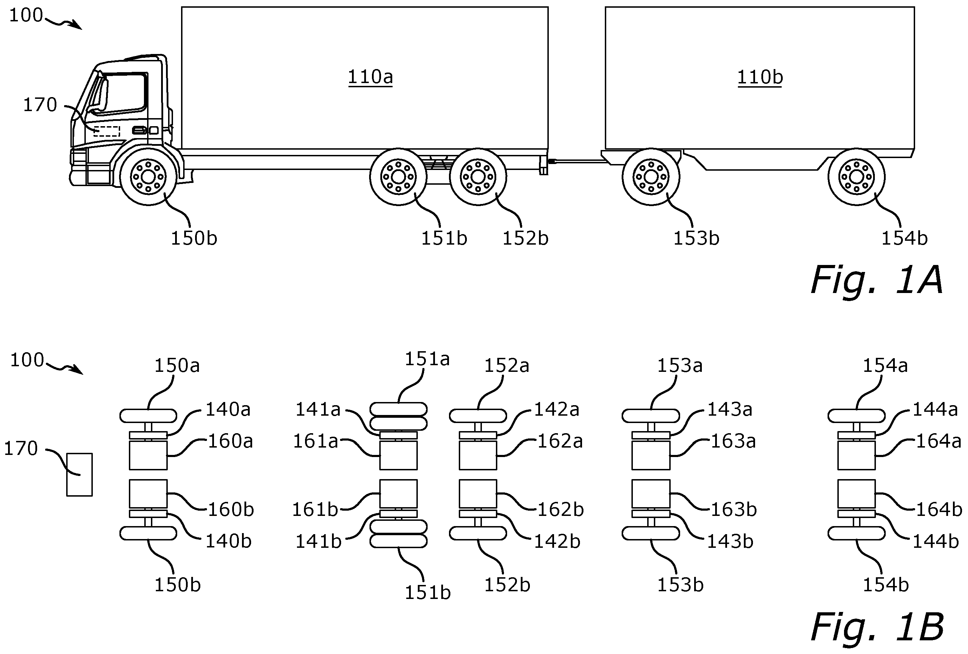

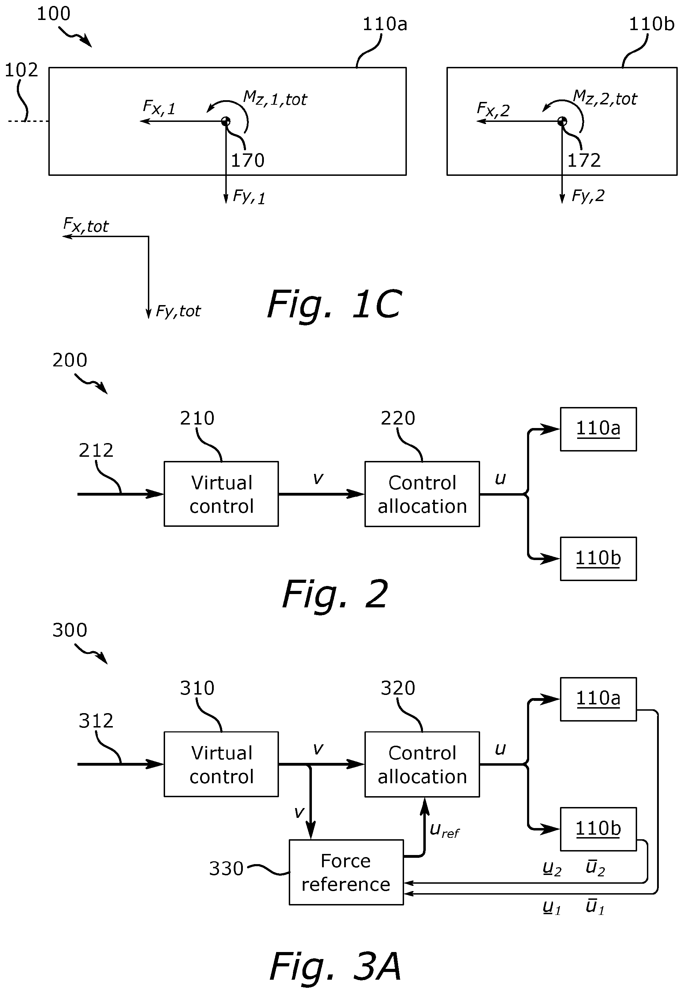

How control allocation is conventionally used to control the actuators of a vehicle combination will now be described in more detail with reference to Figures 1A-1C and Figure 2.

Figures 1A schematically presents a side-view of a vehicle combination 100. In the current example, the vehicle combination 100 includes a towing unit in form of a truck 110a, and one towed unit in form of a drawbar trailer 110b. In other examples, the vehicle combination 100 may e.g. have more than one trailer. In other examples, the towing unit 110a may instead be e.g. a tractor unit, and the towing and towed units 110a and 110b may e.g. form a semi-trailer combination. Other vehicle combinations of multiple vehicle units are of course envisaged, including e.g. a tractor with a B-double, a tractor with two or more semitrailers, a tractor with semitrailer plus a (center axle) trailer, a truck with a center axle trailer, a truck with dolly plus semitrailer, or similar.

The vehicle combination 100 also include at least one controller 170, which is usually provided as part of the towing unit 110a. As will be described below with reference also to Figure 1B, such a controller 170 is configured to perform control allocation in order to control various actuators of the vehicle combination 100.

Figure 1B schematically presents a top-view of a propulsion and braking arrangement of the vehicle combination 100. In the current example, it will be assumed that the vehicle combination 100 is an electric vehicle combination, in which one or more electric machines (such as electric motors) are used to at least partially assume the responsibility of one or more traditional internal combustion engines (ICEs) in the propulsion of the vehicle combination 100.

In the vehicle combination 100, there are provided electric motors on all wheel units, such that each wheel unit may be powered individually. For example, right and left wheel units 150a and 150b on a front axle of the towing unit 110a are powered by right and left front electric motors 160a and 160b, respectively. Right and left wheel units 151a and 151b on a middle axle of the towing unit 110a are powered by right and left middle electric motors 161a and 161b, respectively. Right and left wheel units 152a and 152b on a rear axle of the towing unit 110a are powered by right and left rear electric motors 162a and 162b, respectively. There are also respective right and left front service brakes 140a and 140b, right and left middle brakes 141a and 141b, and right and left rear service brakes 142a and 142b arranged to provide service braking of the individual wheel units 150a-b, 151a-b and 152a-b.

The towed unit 110b is also equipped with electric motors and service brakes. Right and left front electric motors 163a and 163b are provided to power right and left front wheel units 153a and 153b on a front axle of the towed unit 110b, respectively. Right and left rear electric motors 164a and 164b are provided to power right and left wheel units 154a and 154b on a rear axle of the towed unit 110b. The towed unit 110b also has right and left front service brakes 143a and 143b, and right and left rear service brakes 144a and 144b, for providing service braking of the individual wheel units 153a-b and 154a-b.

It may of course be envisaged that not all of the electric motors and/or service brakes shown in Figure 1B are provided, and that the exact configuration of electric motors and/or service brakes may be varied according to user requirements. The exact configuration of the propulsion and braking arrangement may also be such that e.g. a single electric motor is used to power both wheel units on an axle, such that a single electric motor is used to power all wheel units on two or mor axles, or similar. One or more of the wheel units 150-154a/b may of course also be steerable.

As mentioned earlier herein, the vehicle combination 100 includes at least one controller 170 which is responsible for calculating how the actuators (i.e. the electric motors and service brakes) are to be operated in order to generate desired overall forces and/or moments of the vehicle combination 100.

Example forces and moments of the vehicle combination 100 will now be described in more detail with reference also to Figure 1C, which schematically provides a top-view of the same vehicle combination 100 but drawn as boxes 110a and 110b, corresponding to the towing unit 110a and towed unit 110b of Figures 1A and 1B, respectively. The vehicle combination 100 has a longitudinal axis/direction as illustrated by the dashed line 102, and the job of the controller 170 is to control the various actuators of the towing and towed units 110a and 100b such that overall, global longitudinal/axial and transverse/lateral forces $F_{x,tot}$ and $F_{y,tot}$ of the vehicle combination 100 matches requested such forces. The controller 170 may also for example be configured to control the actuators such that also yaw moments $M_{z,1,tot}$ and $M_{z,2,tot}$ around a respective center-of-gravity 170 and 172 of the towing unit 110a and towed unit 110b matches requested such yaw moments. It is further assumed that the actuators of the towing unit 110a are used to generate longitudinal and transverse forces $F_{x,1}$ and $F_{y,1}$ for the towing unit 110a, and that the actuators of the towed unit 110b are used to generate longitudinal and transverse forces $F_{x,2}$ and $F_{y,2}$ for the towed unit 110b.

In what follows, the towing unit 110a will be referred to as a first vehicle unit 110a, and the towed unit 110b will be referred to as a second vehicle unit 110b, to further illustrate that the principle described herein is applicable to more vehicle combinations than exactly the vehicle combination 100 shown in Figures 1A through 1C.

The operation of a conventional method of control allocation in e.g. the vehicle combination 100 will now be described with reference also to Figure 2.

Figure 2 schematically illustrates a conventional method 200 of control allocation in a vehicle combination including multiple vehicle units and a plurality of actuators, in the form of various functional units/blocks. A virtual control unit 210 receives a signal 212 from e.g. a steering wheel and/or gas/brake pedal of the vehicle unit 100, indicating that the driver (or other system) wants to change e.g. the direction and/or the speed of the vehicle combination in a certain way. The signal 212 may of course also originate from elsewhere, e.g. from a lane assist system, a lane following system, an emergency steering system, an emergency braking system, an automated or semi-automated drive system, or any other system which may provide some indication of how the overall forces of the vehicle combination 100 are to be influenced (e.g. steered, propelled or braked).

The virtual control unit 210 receives the signal 212 and calculates what forces and/or moments that need to be applied to the vehicle combination as a whole in order to follow the wish indicated by the signal 212. The result of such a calculation is a virtual control input $v$. The virtual control input $v$ may for example be a vector

$$v = \left[ F_{x,tot}, F_{y,tot}, M_{z,1,tot}, M_{z,2,tot}, \ldots, M_{z,tot,N} \right]^T,$$

where $F_{x,tot}$ and $F_{y,tot}$ are the requested global forces of the vehicle combination as a whole, where $M_{z,i,tot}$ are the requested yaw moment of the $i$:th vehicle unit, e.g. as described earlier herein with reference to Figure 1C, and where $N$ is an integer corresponding to the number of vehicle units in the combination.

The virtual control input $v$ is provided to a control allocation unit 220 whose task it is to solve a control allocation problem in order to find a particular true control input $u$ which satisfies the received virtual control input $v$. The true control input $u$ is another vector which contains data indicative of what forces the respective actuators in the two vehicle units 110a and 110b are to produce in order for the generated forces to meet the requested virtual control input $v$. As electric motors and service brakes generate torque instead of linear forces, it is assumed that e.g. the control allocation unit 220 and/or the vehicle units 110a and 110b (which receive the signal $u$) understand how to convert/translate the received true control input $u$ into actual steering commands for the actuators. For example, by knowing e.g. a radius $r_{ij}$ of a $j$:th wheel (unit) of an $i$:th vehicle unit, the longitudinal force generated by such a wheel (unit) is proportional to $T_{ij}/r_{ij}$, where $T_{ij}$ is the amount of torque applied on the $j$:th wheel (unit) of the $i$:th vehicle unit. By having knowledge also of other factors, such as road friction, losses due to transmissions, differentials, and similar, etc., a true control input in form of a force to be generated by an actuator (i.e. a longitudinal force generated by a wheel (unit) driven over a particular surface) can be translated into a required torque that needs to be applied on the wheel (unit) to generate such a longitudinal force.

To illustrate a particular disadvantage of the conventional method 200, the following example will focus on the longitudinal force-part of the virtual control input, i.e. on $F_{x,tot}$. This may be a relevant example if the vehicle combination is for example driving along a straight section of a road, and the driver only either wants to reduce or increase the speed of the vehicle. It will further be assumed that the control allocation unit 220 is such that it converts the input $v$ into force commands for the electric motors and service brakes of the first and second units 110a and 100b, respectively. Generally, for $N$ vehicle units, the true control input $u$ provided from the control allocation unit 220 may be a true control input vector

$$u = \left[F_{em,1}, F_{sb,1}, F_{em,2}, F_{sb,2}, \ldots, F_{em,N}, F_{sb,N}\right]^T,$$

where $F_{em,i}$ and $F_{sb,i}$ are the combined longitudinal forces to be generated by the electric motors/machines and service brakes, respectively, of the $i$:th vehicle unit, such that $F_{x,i} = F_{em,i} + F_{sb,i}$. In some conventional examples, the true control input may even specify forces for each actuator in each vehicle unit, further increasing the size of the vector $u$.

It should be noted that if the number of components of the true control input $u$ exceeds the number of components in the virtual control input v, the vehicle combination is over-actuated and the problem of controlling such a vehicle combination is underdetermined as there then exist multiple possible solutions $u$ which all satisfy the requirement stated by v.

The control allocation task solved by the control allocation unit 220 can thus be reformulated as the task of solving a sequential least-squares optimization problem

$$u = \arg\min_{u}\left\{\left\|W_u(u - u_{ref})\right\| : u \in \arg\min_{\underline{u} < u < \overline{u}}\left\|W_v(Bu - v)\right\|\right\}, \qquad (1)$$

where $u_{ref}$ is a preferred/desired reference control input, $W_u$ and $W_v$ are (positive definite) weighting matrices, $B$ is a control efficiency matrix, and $\underline{u}$ and $\overline{u}$ are lower and upper capabilities of the various actuators, respectively, all defined and used as conventionally done in control allocation theory.

Solving the above problem as defined by equation (1) is often not tractable, and in particularly not in real-time. For this reason, the control allocation unit 220 may instead strive to solve a weighted least squares optimization problem

$$u = \arg\min_{\underline{u} < u < \overline{u}}\left\|W_u(u - u_{ref})\right\|^2 + \gamma\left\|W_v(Bu - v)\right\|^2, \qquad (2)$$

where $\gamma$ is a weighting factor, such that when $\gamma \to \infty$, the solution of the weighted least squares problem of equation (2) approaches the solution of the sequential least squares problems of equation (1).

In the conventional control allocation unit 220, the reference control input $u_{ref}$ is often set to zero in order to minimize the overall energy consumed by each actuator, and/or to reduce service brake wear. Phrased differently, the conventional control allocation unit 220 often attempts to find a solution centered around a working point $u \approx u_{ref} = 0$.

The above conventional approach may result in undesirable and inefficient (in terms of e.g. vehicle combination energy consumption) solutions wherein actuators in different vehicle units end up working against each other, such that e.g. a longitudinal force generated by one vehicle unit counteracts a longitudinal force generated by another vehicle unit.

To illustrate the above issue, reference is once again made to the vehicle combination 100 of Figures 1A-1C. As the vehicle combination 100 has $N = 2$ vehicle units (the vehicle units 110a and 110b), the virtual and true control inputs are

$$v = \left[F_{x,tot}, F_{y,tot}, M_{z,1,tot}, M_{z,2,tot}\right]^T,$$

and

$$u = \left[F_{em,1}, F_{sb,1}, F_{em,2}, F_{sb,2}\right]^T,$$

where $F_{em,1}$ is the combined longitudinal force to be generated by the electric motors 160a-b, 161a-b and 162a-b of the first vehicle unit 110a, $F_{em,2}$ is the combined longitudinal force to be generated by the electric motors 163a-b and 164a-b of the second vehicle unit 110b, $F_{sb,1}$ is the combined longitudinal braking force to be generated by the service brakes 140a-b, 141a-b and 142a-b of the first vehicle unit 110a, and $F_{sb,2}$ is the combined longitudinal braking force to be generated by the service brakes 143a-b and 144a-b of the second vehicle unit 110b. In the particular example, it is assumed that the requested longitudinal force of the vehicle combination as a whole is $F_{x,tot} = 10$ kilo-Newtons (kN).

The task of the control allocation unit 220 is thus to find the true control input $u$ based on the virtual control input $v = [F_{x,tot}, \ldots]^T = [10$ kN, $\ldots]^T$, i.e. the desire of e.g. the driver has been interpreted by the virtual control unit 210 as if the overall longitudinal force $F_{x,tot}$ of the vehicle combination 100 should be 10 kN. As the control allocation unit 220 has to operate in real-time and only has a finite number of iterations available before a solution must be arrived at, a potential solution output by the control allocation unit 220 is a true control input $u$ where (for example)

$$u = \left[F_{em,1}, F_{sb,1}, F_{em,2}, F_{sb2}\right]^T = [14\text{ kN}, 0\text{ N}, -3\text{ kN}, -1\text{ kN}]^T.$$

This solution satisfies the virtual control input $v = [F_{x,tot}, ...]^T = [10\text{ kN}, ...]^T$, as the sum of the longitudinal forces to be generated by the electric motors and service brakes of the vehicle units 110a and 100b equals 10 kN. However, as can also be seen, this solution implies that the first vehicle unit 110a is trying to propel the vehicle combination forward by using its electric motors to apply 14 kN of propulsion force in the forward direction, while the second vehicle unit 110b is trying to brake the vehicle combination (by using both its electric motors and service brakes) by applying 14 kN of braking force in the negative direction (if both propulsion and braking forces are measured such that they are positive in the forward, longitudinal direction 102 of the vehicle combination 100). This solution is thus inefficient as it makes the vehicle units 110a and 110b work against each other in a non-cooperative manner. This inefficient type of solution is a result of the conventional control allocation unit 220 attempting to minimize the difference between $u$ and $u_{ref} = 0$ as well as minimizing the difference between $Bu$ and $v$, a tradeoff often causing the obtained solution to be less than optimal from an energy consumption perspective, in combination with the control allocation unit 210 having a limited amount of time available for converging towards a most optimal solution.

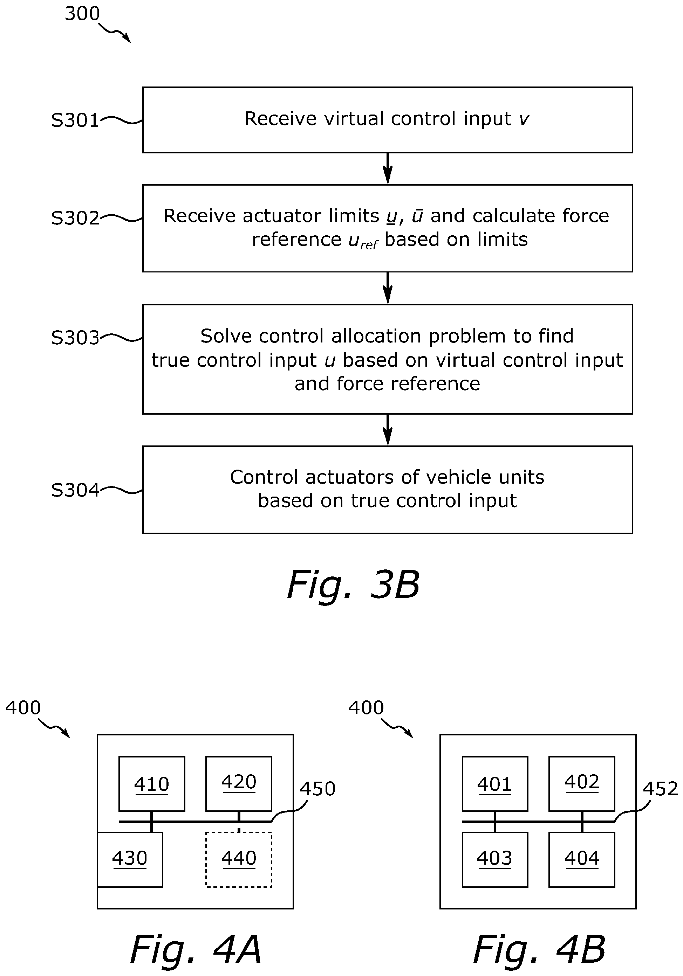

How e.g. a method as envisaged in the present disclosure helps to overcome the above-mentioned issues will now be described in more detail with reference also to Figures 3A and 3B.

Figure 3A schematically illustrates, using various functional units, a method 300 of control allocation in multi-unit vehicle combinations according to various embodiments of the present disclosure. Figure 3B schematically illustrates a flowchart of such embodiments of the method 300.

As in the method 200 described with reference to Figure 2, a virtual control unit 310 receives a signal 312 from e.g. a steering wheel, gas pedal, brake pedal, or any other suitable control system of the vehicle combination 100, and transforms such a request into a virtual control input v. The virtual control input v is sent to, and received by (in a step S301) a control allocation unit 320 which performs (in a step S303) control allocation in order to find a true control input $u$, which is then provided to the vehicle units 110a and 110b such that the vehicle units 110a and 110b can transform the true control input $u$ into steering commands for their respective actuators (i.e. electric machines/motors and/or service brakes, such as shown in Figure 1B). Phrased differently, in a step S304, the true control input $u$ is used to control the actuators of the first and second vehicle units 110a and 110b.

The method 300 differs from the conventional method 200 in that there is also provided a force reference unit 330, who is assigned the task of calculating the reference control input (or "control reference") $u_{ref}$ in an improved way. To do this, the force reference unit 330 receives and uses the virtual control input v from the virtual control unit 310, but also receives (in a step S302) and uses lower and upper capabilities $\underline{u} = [\underline{u}_1, \underline{u}_2]$ and $\overline{u} = [\overline{u}_1, \overline{u}_2]$ of the various actuators in the first and second vehicle units 110a and 110b, respectively. The capabilities may for example be provided from the vehicle units 110a and 110b, and may in some embodiments be provided in real-time, such that they reflect the current capabilities of the various actuators (capabilities which may change with time depending on factors such as e.g. a current loading of the vehicle combination, road slope, component wear, current degree of actuation, current cooling capacity of motors and/or service brakes, etc.). The calculated reference control input $u_{ref}$ is provided to the control allocation unit 220 and used, in the step S303, to do the control allocation task. Once the control allocation problem has been solved by the control allocation unit 310, the method 300 proceeds with controlling (in a step S304) the various actuators of the vehicle units using the generated true control input $u$.

In particular, the calculation/defining of the reference control input $u_{ref}$ is, in the envisaged improved method, done such that:

a) The capabilities $\underline{u}$ and $\overline{u}$ of the actuators of the vehicle units are taken into account, and

b) If the true control input $u$ matches the reference control input $u_{ref}$, the contribution at least to the longitudinal force $F_{x,tot}$ (as requested in the virtual control input $v$) from one of the vehicle units 110a and 110b does not counteract the contribution to the longitudinal force $F_{x,tot}$ from the other one of the vehicle units 110a and 110b.

An example of how this can be done as envisaged in the present disclosure will now be provided, using once again also the vehicle combination 100 shown and described with reference to Figures 1A-1C for illustrative purposes. In this example, the vehicle units 110a and 110b each send their (actuator) capabilities $\underline{u}_i$ and $\overline{u}_i$ to the force reference unit 330, which also receives the virtual control input v from the virtual control unit 310. For the example vehicle combination 100, the actuator capabilities may for example include minimum and maximum capabilities of the electric motors and service brakes of the first vehicle unit 110a and 110b, respectively. As mentioned earlier herein, a "minimum capability" may include a negative force value, illustrating that the service brakes (but also the electric motors, if operated as generators) provide braking and not propulsion capabilities.

If describing the functioning of the envisaged force reference unit 330 as an algorithm, this algorithm receives as its input at least $\underline{u}$, $\overline{u}$, $v$, $\lambda$, $\kappa$ and $N$, and returns as its output at least $u_{ref}$. As explained above, $u$ and $\overline{u}$ are the capabilities of the actuators of the vehicle units (e.g., $\underline{u}$ may be an array containing all lower capabilities $\underline{u}_j$ of the actuators of the vehicle units, and $\overline{u}$ may be another array containing all upper capabilities $\overline{u}_j$ of the actuators of the vehicle units). The input parameter $v$ is the virtual control input vector provided by the virtual control unit 310. In addition, $\lambda$ is the predefined split-vector $\lambda = [\lambda_1, \lambda_2, ..., \lambda_N]$ indicating how to split the overall force between the vehicle units, and N is the total number of vehicle units. The parameter $\kappa$ is a vector $\kappa = [\kappa_{em,1}, \kappa_{sb,1}, \kappa_{em,2}, \kappa_{sb,2}, ..., \kappa_{em,N}, \kappa_{sb,N}]$ defining how electric motor braking power and service brake power should be distributed locally/internally in each vehicle unit, wherein each term $\kappa_{em/sb,i}$ indicates a desired split between electric motor/service braking in the *i:th* unit, such that $\kappa_{em,i} + \kappa_{sb,i} = 1$, $\forall i$. It should be noted that, as also envisaged herein, one or both of $\lambda$ and $\kappa$ may be fixed and not used as input to the algorithm. In other examples, $\kappa$ may for example use a same split between electric motor/service braking in each vehicle unit, such that e.g. $\kappa_{em,i} = \kappa_{em}$, $\kappa_{sb,i} = \kappa_{sb}$, and $\kappa = [\kappa_{em}, \kappa_{sb}]$.

The lower and upper capability-vectors may for example be defined as

$$\underline{u} \subseteq \left[\underline{u}_{em,1}, \underline{u}_{sb,1}, \underline{u}_{em,2}, \underline{u}_{sb,2}, ..., \underline{u}_{em,N}, \underline{u}_{sb,N}\right],$$

and

$$\overline{u} \subseteq \left[\overline{u}_{em,1}, \overline{u}_{sb,1}, \overline{u}_{em,2}, \overline{u}_{sb,2}, ..., \overline{u}_{em,N}, \overline{u}_{sb,N}\right],$$

where $\underline{u}_{em/sb,i}$ and $\overline{u}_{em/sb,i}$ are minimum and maximum capabilities of the electric motors/service brakes of the *i*:th vehicle unit, respectively.

The reference control input $u_{ref}$ may be defined as an array

$$u_{ref} = \left[F_{x,em,1}^{ref}, F_{x,sb,1}^{ref}, F_{y,1}^{ref}, M_{z,1}^{ref}, ..., F_{x,em,N}^{ref}, F_{x,sb,N}^{ref}, F_{y,N}^{ref}, M_{z,N}^{ref}\right],$$

where $F_{x,em/sb,i}^{ref}$ are the reference longitudinal forces for the electric motors/service brakes of the *i*:th vehicle unit, and where $F_{y,i}^{ref}$ and $M_{z,i}^{ref}$ are the corresponding lateral reference force and reference yaw moment for the i:th vehicle unit.

In the example with only two vehicle units 110a and 110b, we may for example have that

$$\lambda = [\lambda_1, \lambda_2],$$

$$\underline{u} \subseteq \left[\underline{u}_{em,1}, \underline{u}_{sb,1}, \underline{u}_{em,2}, \underline{u}_{sb,2}\right],$$

$$\overline{u} \subseteq \left[\overline{u}_{em,1}, \overline{u}_{sb,1}, \overline{u}_{em,2}, \overline{u}_{sb,2}\right],$$

and

$$u_{ref} = \left[F_{x,em,1}^{ref}, F_{x,sb,1}^{ref}, F_{y,1}^{ref}, M_{z,1}^{ref}, F_{x,em,2}^{ref}, F_{x,sb,2}^{ref}, F_{y,2}^{ref}, M_{z,2}^{ref}\right].$$

At the start of the algorithm, the reference control input $u_{ref}$ may e.g. be initialized with all its components being zero. As an alternative, it may be desirable to e.g. at least set $F_{y,i}^{ref} = F_{y,tot}$, and $M_{z,i}^{ref} = M_{z,i,tot}$. Likewise, also at the start of the algorithm, it may be desirable to calculate forces $F_{split,i}$ indicating how much of the total requested longitudinal force $F_{x,tot}$ that is to be generated by each vehicle unit. Using the vector $\lambda$, this may be achieved by defining $F_{split,i} = \lambda_i F_{x,tot}$. In other embodiments, it may be desirable to split the longitudinal force as evenly as possible among the vehicle units. For example, if having N vehicle units, $\lambda$ can be defined such that all its elements equal $\lambda_i = 1/N$. For the vehicle combination 100 with two vehicle units 110a and 110b, we may e.g. have that $F_{split,1} = F_{split,2} = F_{x,tot}/2$.

As a next step, the algorithm checks whether the requested force $F_{x,tot}$ is positive or negative, i.e. whether the desire is to propel or brake the vehicle combination as a whole. If $F_{x,tot} > 0$, the algorithm may proceed with a part A) as defined below, and otherwise proceed with a part B) as also defined further below.

Part A) may include looping over all vehicle units (i.e. increasing a looping index i from 1 to *N*), i.e. such that a first loop-step is performed for each i:th vehicle unit. This may be done to split the propelling force among the vehicle units. In each such first looping-step, a remaining longitudinal force $F_{x,rem}$ may be defined/updated as $F_{x,rem} = F_{x,tot} - S_i$, where $S_i$ is a sum

$$S_i = \sum_{j<i} F_{x,em,j}^{ref},$$

i.e. a sum of all previously (in the ongoing looping) calculated reference longitudinal forces (for the electric motors) of vehicle units earlier in the vehicle combination chain. For the first vehicle unit, the remaining longitudinal force $F_{x,rem}$ will thus be equal to $F_{x,tot}$, and will in each successive first looping-step be reduced as more and more of the total request force $F_{x,tot}$ becomes distributed among previous vehicle units. The reference longitudinal force for the j:th vehicle unit may then be defined as $F_{x,em,i}^{ref} = \min(\underline{u}_{em,i}, F_{split,i}, F_{x,rem})$ .

As the service brakes are not capable of generating propulsion force, it is noted that the corresponding, brake-related elements of the reference control input $u_{ref}$ thus remains zero after having complete part A).

Part B) may include defining a bookkeeping longitudinal force vector $F_{bk} = [F_{bk,1}, ..., F_{bk,N}]$. This vector may be initialized to zero, e.g. such that all elements $F_{bk,i} = 0$. Part B) may then include also looping over all vehicle units as described above, but such that a second loop-step is performed for each i:th vehicle unit. This may be done to calculate a total brake force per vehicle unit. In each second loop-step, a remaining longitudinal force $F_{x,rem}$ may be defined/updated according to $F_{x,rem} = F_{x,tot} - \Sigma_{j<i} F_{bk,j}$, and the bookkeeping longitudinal force vector $F_{bk}$ is then updated such that $F_{bk,i} = \max(\underline{u}_{em,i} + \underline{u}_{sb,1}, F_{split,i}, F_{x,rem})$.

After having completed the looping to calculate the total brake force per vehicle unit, part B) may continue by, for each of the vehicle units, calculate the reference longitudinal forces for the electric motors and/or service brakes of the vehicle unit as

$$F_{x,em,i}^{ref} = \max(\underline{u}_{em,i}, \kappa_{em,i} F_{bk,i})$$

and

$$F_{x,sb,i}^{ref} = \max(\underline{u}_{sb,i}, \kappa_{sb,i} F_{bk,i}, F_{bk,i} - F_{x,em,i}^{ref}).$$

After completing either one of part A) and part B), the algorithm may then end/return by outputting the vector $u_{ref}$ including the various terms $F_{x,em,i}^{ref}$ and $F_{x,sb,i}^{ref}$ .

As a result of the above (algorithm), the reference control input $u_{ref}$ is generated such that it forces the control allocation unit 320 to (more likely) converge to a solution in which the various vehicle units do not end up working against each other. This because the proposed method/algorithm includes distributing the various (propulsion or braking forces) evenly among the vehicle units, in order to avoid one vehicle unit e.g. ending up working against another vehicle unit. Phrased differently, the vector $u_{ref}$ if generated as proposed herein is more likely to make the control allocation unit 320 arrive at a solution in which there is no simultaneous braking and acceleration of a same vehicle, or e.g. a solution in which one vehicle unit is not e.g. braking while another vehicle unit is driven/accelerated. This is all achieved by the even (or at least according to the pre-defined split vector $\lambda$) splitting of the forces among the vehicle units, and in particular by taking the capabilities of the various actuators in each vehicle unit into account while performing such a splitting/distribution of the forces.

An example of the above-described algorithm, written in pseudo code, is provided below.

Example algorithm

**Input:** $\underline{u}, \overline{u}, v, \lambda, \kappa, N$

**Output:** $u_{ref}$

$$\underline{u} \subseteq \begin{bmatrix} \underline{u}_{em,1} & \underline{u}_{sb,1} & \underline{u}_{em,2} & \underline{u}_{sb,2} & \cdots & \underline{u}_{em,N} & \underline{u}_{sb,N} \end{bmatrix}$$

$$\overline{u} \subseteq \begin{bmatrix} \overline{u}_{em,1} & \overline{u}_{sb,1} & \overline{u}_{em,2} & \overline{u}_{sb,2} & \cdots & \overline{u}_{em,N} & \overline{u}_{sb,N} \end{bmatrix}$$

$$v \subseteq \begin{bmatrix} F_{x,tot} & F_{y,tot} & M_{z,1,tot} & M_{z,2,tot} & \cdots & M_{z,N,tot} \end{bmatrix}$$

$$F_{x,em,1}^{ref} = F_{x,sb,1}^{ref} 0$$

$$\vdots$$

$$F_{x,em,N}^{ref} = F_{x,sb,N}^{ref} = 0$$

$$F_{y,1}^{ref} = F_{y,2}^{ref} = \cdots = F_{y,N}^{ref} = F_{y,tot}$$

$$M_{z,1}^{ref} = M_{z,1,tot}$$

$$\vdots$$

$$M_{z,N}^{ref} = M_{z,N,tot}$$

$$u_{ref} \subseteq \left[ F_{x,em,1}^{ref} \ F_{x,sb,1}^{ref} \ F_{y,1}^{ref} \ M_{z,1}^{ref} \ \dots \ F_{x,em,N}^{ref} \ F_{x,sb,N}^{ref} \ F_{y,N}^{ref} \ M_{z,N}^{ref} \right]$$

$$F_{split,1} \leftarrow \lambda_1 F_{x,tot}$$

$$F_{split,2} \leftarrow \lambda_2 F_{x,tot}$$

$$\vdots$$

$$F_{split,N} \leftarrow \lambda_N F_{x,tot}$$

**if** $F_{x,tot} > 0$ **then**

*Part A), split propelling forces on units:*

    **for** $i \leftarrow 1$ to $n$ **do**

$$S = \sum_{j<i} F_{x,em,j}^{ref}$$

$$F_{x,rem} = F_{x,tot} - S$$

$$F_{x,em,i}^{ref} = \min\left( \bar{u}_{em,i}, F_{split,i}, F_{x,rem} \right)$$

    **end for**

**else**

*Part B), calculate total brake force perf unit:*

$$F_{bk} \subseteq [F_{bk,1} \ F_{bk,2} \ \dots F_{bk,N}]$$

    Do: *Initialize elements of $F_{bk}$ to zero*

    **for** $i \leftarrow 1$ to $N$

$$F_{x,rem} = F_{x,tot} - \sum_{j<i} F_{bk,j}$$

$$F_{bk,i} = \max(\underline{u}_{em,i} + \underline{u}_{sb,1}, F_{split,i}, F_{x,rem})$$

**end for**

*Distribute brake forces among motors and brakes on each unit*

**for** $i \leftarrow 1$ to $N$

$$F_{split}^{em} \leftarrow \kappa_{em,i} F_{bk,i}$$

$$F_{split}^{sb} \leftarrow \kappa_{sb,i} F_{bk,i}$$

$$F_{x,em,i}^{ref} = \max\left(\underline{u}_{em,i}, F_{split}^{em}\right)$$

$$F_{x,sb,i}^{ref} = \max\left(\underline{u}_{sb,i}, F_{split}^{sb}, F_{bk,i} - F_{x,em,i}^{ref}\right)$$

**end for**

**end if**

*End of algorithm*

With reference to Figures 4A and 4B, various embodiments of a controller as envisaged herein will now be described in more detail.

Figure 4A schematically illustrates, in terms of a number of functional units, the components of an embodiment of a controller 400 for control allocation in a vehicle combination (such as the vehicle combination 100 described with reference to Figures 1A-1C) including multiple vehicle units (such as the vehicle units 110a and 110b) and a plurality of actuators configured to generate propulsion and/or braking forces (such as e.g. the service brakes 140-144a/b and/or the electric motors 160-164a/b), where the plurality of actuators are distributed among the multiple vehicle units (such as shown in e.g. Figure 1B). The controller 400 includes processing circuitry 410. The processing circuitry 410 is provided using any combination of one or more of a suitable central processing unit (CPU), multiprocessor, microcontroller, digital signal processor (DSP), etc., capable of executing software instructions stored in a computer program product (not shown, but envisaged herein) stored on a (computer-readable) storage medium 420. The processing circuitry 410 may further be provided as at least one application specific integrated circuit (ASIC), or field-programmable gate array (FPGA), or similar.

Particularly, the processing circuitry 410 is configured to cause the controller 400 to perform a set of operations, or steps, such as the steps S301-S304 as disclosed above e.g. when describing the method 300 illustrated in Figure 3B. For example, the storage medium 420 may store a set of operations, and the processing circuitry 410 may be configured to retrieve the set of operations from the storage medium 420 to cause the controller 400 to perform the set of operations. The set of operations may be provided as a set of executable instructions. Thus, the processing circuitry 410 is thereby arranged to execute methods as disclosed herein e.g. with reference to Figures 3A and 3B.

The storage medium 420 may also include persistent storage, which, for example, can be a memory in form of any single or combination of magnetic memory, optical memory, solid state memory or even remotely mounted memory. The storage medium 420 may thus provide non-transitory storage, storing computer-readable instructions for the processing circuitry 410.

The controller 400 may further include a communications interface 430 for communications with other entities and objects, in order to e.g. receive/obtain one or more of the virtual control input v (e.g. from the virtual control unit 310 depicted in Figure 3A), and to e.g. output one or more control signals to the actuators of the vehicle units, and/or more control signals for the vehicle units such that each vehicle unit can decide what control signals to generate for its own actuators. The interface 430 may also be used to receive other information about the vehicle combination 100. The communication interface 430 may include one or more transmitters and receivers, including analogue and/or digital components, and may utilize e.g. one or more wired and/or wireless connections for this purpose.

The processing circuitry 410 controls the general operation of the controller 400 e.g. by sending data and control signals to the communications interface 430 and the storage medium 420, by receiving data and reports from the communications interface 430, and by retrieving data and instructions from the storage medium 420. The controller 400 may of course optionally also include other components, here illustrated by the dashed box 440. A communication bus 450 is also provided and connects the various modules/units 410, 420, 430, and 440 (if included), such that they may communicate with each other to exchange information.

Figure 4B schematically illustrates, in terms of a number of functional modules 401-404, the components of a controller 400 according to one or more embodiments of the present disclosure. The controller 400 includes at least a first receive module 401 configured to perform step S301 of the method 300 described with reference to Figure 3B, a second receive module 402 configured to perform step S302 of the method 300, a solve module 403 configured to perform step S303 of the method 300, and a control module 404 configured to perform step S304 of the method 300. In some embodiments, the controller 400 may of course include also one or more other such functional modules (not shown) if the controller 400 is assigned to perform also one or more other tasks.

In general terms, each functional module (such as modules 401-404) may be implemented in hardware or in software. Preferably, one or more or all functional modules may be implemented by the processing circuitry 410, possibly in cooperation with the communications interface 430 and/or the storage medium 420. The processing circuitry 310 may thus be arranged to from the storage medium 420 fetch instructions as provided by a functional module (e.g. 401-404), and to execute these instructions and thereby perform any steps of the method 300 or any other method envisaged herein, performed by the controller 400 as disclosed herein.

The present disclosure also envisages to provide a vehicle unit configured to form part of a vehicle combination including multiple vehicle units and a plurality of actuators, as already described several times herein. The vehicle unit may e.g. be a vehicle unit such as the vehicle unit 110a or 110b, or similar. The vehicle unit include a control as described herein, e.g. the controller 400 described with reference to Figures 4A and 4B. The controller may e.g. replace the controller 170 illustrated in Figure 1A, if the vehicle unit as envisaged herein is e.g. the first vehicle unit 110a. If the vehicle unit as envisaged herein is e.g. the second vehicle unit 110b, the controller may instead consequently be located within that second vehicle unit 110b.

The present disclosure also envisages to provide a vehicle combination including multiple vehicle units as described herein, where the vehicle combination includes a controller as envisaged herein, e.g. the controller 400. As also mentioned herein, the actuators of the vehicle units of this vehicle combination may e.g. include one or more electric machines/motors and one or more service brakes, where, in some embodiments, the electric machines/motors are capable of generating both propulsion and braking force(s).

The present disclosure also envisages to provide a computer program for control allocation in a vehicle combination including multiple vehicle units as described herein. The computer program includes computer code that, when running on a processing circuitry of a controller (such as e.g. the processing circuitry 410 of the controller 400 described with reference to Figures 4A and 4B), causes the controller to perform the various steps of any method (such as e.g. method 300) as described and envisaged herein.

The present disclosure also envisages a computer program product (not shown) in which the above envisaged computer program is stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable. In general, a "data carrier" may be a computer-readable storage medium, such as e.g. the storage medium 420 of the controller 400.

Although features and elements may be described above in particular combinations, each feature or element may be used alone without the other features and elements or in various combinations with or without other features and elements. Additionally, variations to the disclosed embodiments may be understood and effected by the skilled person in practicing the claimed invention, from a study of the drawings, the disclosure, and the appended claims.

In the claims, the words "comprising" and "including" does not exclude other elements, and the indefinite article "a" or "an" does not exclude a plurality. The mere fact that certain features are recited in mutually different dependent claims does not indicate that a combination of these features cannot be used to advantage.

In summary of the present disclosure, it is provided an improved way of performing control allocation in a vehicle combination including multiple vehicle units, in which in particular a reference control input for a control allocation problem is defined such that it takes the various capabilities of the actuators of the vehicle units into account, and such that it forces the control allocation solver to more likely/quicker converge to a solution in which one vehicle unit does not end up working against another vehicle unit of the combination when generating a longitudinal force of the vehicle combination as a whole. The proposed solution thus causes the solutions of the control allocation problem to be more efficient in terms of e.g. energy consumption of the vehicle combination.

**Claims**

1.  A method of control allocation in a vehicle combination including multiple vehicle units and a plurality of actuators configured to generate propulsion and/or braking forces, the plurality of actuators being distributed among the multiple vehicle units, the method comprising:

    - receiving requested global forces ($v$) for the vehicle combination as a whole;
    - solving a control allocation problem in an attempt to find a true control input (u) for the plurality of actuators based on the requested global forces, including an attempt to minimize a difference between the true control input and a reference control input ($u_{ref}$) for the plurality of actuators, and
    - controlling the plurality of actuators based on the true control input such that each vehicle unit contributes to a longitudinal force of the vehicle combination indicated in the requested global forces,

    wherein the method is **characterized by** further defining the reference control input such that:

    a) capabilities of the plurality of actuators to generate propulsion and/or braking force are taken into account, and
    b) if the true control input matches the reference control input, the contribution to the longitudinal force from one of the vehicle units does not counteract the contribution to the longitudinal force from any other one of the vehicle units.

2.  The method according to claim 1, wherein the reference control input is defined such that, further, if the true control input matches the reference control input, there is no simultaneous braking and acceleration of a same vehicle unit of the multiple vehicle units.

3.  The method according to claim 1 or 2, wherein defining the reference control input is further such that if the true control input matches the reference control input, the longitudinal force of the vehicle combination is split as evenly as possible among the multiple vehicle units subject to the capabilities of the actuators.

4.  The method according to any one of claims 1 to 3, wherein the method further includes defining a preset split-ratio of the longitudinal force of the vehicle combination among the multiple vehicle units, and wherein defining the reference control input is further such that if the true control input matches the reference control input, the longitudinal force of the vehicle combination is split among the multiple vehicle units in accordance with the preset split-ratio.

5.  The method according to any one of the preceding claims, wherein the plurality of actuators includes one or more electric machines and one or more service brakes.

6.  The method according to claim 5, wherein the one or more electric machines are capable of generating both propulsion and braking force.

7.  A controller for control allocation in a vehicle combination including multiple vehicle units and a plurality of actuators configured to generate propulsion and/or braking forces, the plurality of actuators being distributed among the multiple vehicle units, and the controller comprising processing circuitry configured to cause the controller to:

    - receive requested global forces ($v$) for the vehicle combination as a whole;
    - receive at least one indication of capabilities of the plurality of actuators to generate propulsion and/or braking force;
    - solve a control allocation problem in an attempt to find a true control input (u) for the plurality of actuators based on the requested global forces, including an attempt to minimize a difference between the true control input and a reference control input ($u_{ref}$) for the plurality of actuators, and
    - control the plurality of actuators based on the true control input such that each vehicle unit contributes to a longitudinal force of the vehicle combination indicated in requested global forces,

    wherein the controller is **characterized by** the processing circuitry being further configured such that it causes the controller to define the reference control input such that:

    a) the capabilities of the plurality of actuators to generate propulsion and/or braking force are taken into account, and
    b) if the true control input matches the reference control input, the contribution to the longitudinal force from one of the vehicle units does not counteract the contribution to the longitudinal force from any other one of the vehicle units.

8. The controller according to claim 7, wherein said processing circuitry is further configured to cause the controller to perform a method according to any one of claims 2 to 6.

9. A vehicle unit configured to form part of a vehicle combination including multiple vehicle units and a plurality of actuators configured to generate propulsion and/or braking forces, the plurality of actuators being distributed among the multiple vehicle units, and the vehicle unit comprising a controller according to claim 7 or 8.

10. A vehicle combination including multiple vehicle units and a plurality of actuators configured to generate propulsion and/or braking forces, wherein the plurality of actuators are distributed among the multiple vehicle units, and wherein the vehicle combination includes a controller according to claim 7 or 8.

11. The vehicle combination according to claim 10, wherein the plurality of actuators includes one or more electric machines and one or more service brakes.

12. The vehicle combination according to claim 11, wherein the one or more electric machines are capable of generating both propulsion and braking force.

13. A computer program for control allocation in a vehicle combination including multiple vehicle units and a plurality of actuators configured to generate propulsion and/or braking forces, the plurality of actuators being distributed among the multiple vehicle units, the computer program comprising computer code that, when running on processing circuitry of a controller of the vehicle combination, causes the controller to:

- receive requested global forces ($v$) for the vehicle combination as a whole;
- receive at least one indication of capabilities of the plurality of actuators to generate propulsion and/or braking force;
- solve a control allocation problem in an attempt to find a true control input ($u$) for the plurality of actuators based on the requested global forces, including an attempt to minimize a difference between the true control input and a reference control input ($u_{ref}$) for the plurality of actuators, and
- control the plurality of actuators based on the true control input such that each vehicle unit contributes to a longitudinal force of the vehicle combination indicated in the requested global forces,

wherein the computer program is **characterized by** the processing circuitry being further configured such that it causes the controller to define the reference control input such that:

a) the capabilities of the plurality of actuators to generate propulsion and/or braking force are taken into account, and
b) if the true control input matches the reference control input, the contribution to the longitudinal force from one of the vehicle units does not counteract the contribution to the longitudinal force from any other one of the vehicle units.

14. The computer program according to claim 13, wherein the computer code is further such that it, when running on said processing circuitry of the controller, causes the controller to perform a method according to any one of claims 2 to 6.

15. A computer program product comprising a computer program according to claim 13 or 14, and a computer-readable storage medium on which the computer program is stored.

**Patentansprüche**

1. Verfahren zur Steuerungszuordnung in einer Fahrzeugkombination, einschließlich mehrerer Fahrzeugeinheiten und einer Vielzahl von Aktuatoren, die dazu konfiguriert sind, Antriebs- und/oder Bremskräfte zu erzeugen, wobei die Vielzahl von Aktuatoren unter den mehreren Fahrzeugeinheiten verteilt sind, wobei das Verfahren Folgendes umfasst:

- Empfangen von globalen Kräften (v) für die Fahrzeugkombination als Ganzes;

- Lösen eines Steuerungszuordnungsproblems bei einem Versuch, eine tatsächliche Steuereingabe ($u$) für die Vielzahl von Aktuatoren basierend auf den angeforderten globalen Kräften zu finden, einschließlich eines Versuchs, eine Differenz zwischen der tatsächlichen Steuereingabe und einer Referenzsteuereingabe ($u_{ref}$) für die Vielzahl von Aktuatoren zu minimieren, und

- Steuern der Vielzahl von Aktuatoren basierend auf der tatsächlichen Steuereingabe, so dass jede Fahrzeugeinheit zu einer Längskraft der Fahrzeugkombination beiträgt, die in den angeforderten globalen Kräften angegeben ist,

wobei das Verfahren durch das weitere Definieren der Referenzsteuereingabe gekennzeichnet ist, so dass:

a) Funktionen der Vielzahl von Aktuatoren zum Erzeugen einer Antriebs- und/oder Bremskraft berücksichtigt werden, und

b) wenn die tatsächliche Steuereingabe mit der Referenzsteuereingabe übereinstimmt, der Beitrag zur Längskraft von einer der Fahrzeugeinheiten nicht dem Beitrag zur Längskraft von einer anderen der Fahrzeugeinheiten entgegenwirkt.

2. Verfahren nach Anspruch 1, wobei die Referenzeingabe derart definiert ist, dass, wenn die tatsächliche Steuereingabe mit der Referenzsteuereingabe übereinstimmt, keine gleichzeitige Bremsung und Beschleunigung derselben Fahrzeugeinheit der mehreren Fahrzeugeinheiten stattfindet.

3. Verfahren nach Anspruch 1 oder 2, wobei das Definieren der Referenzsteuereingabe ferner derart ist, dass, wenn die tatsächliche Steuereingabe mit der Referenzsteuereingabe übereinstimmt, die Längskraft der Fahrzeugkombination, abhängig von den Funktionen der Aktuatoren, so gleichmäßig wie möglich unter den mehreren Fahrzeugeinheiten aufgeteilt wird.

4. Verfahren nach einem der Ansprüche 1 bis 3, wobei das Verfahren ferner das Definieren eines voreingestellten Aufteilungsverhältnisses der Längskraft der Fahrzeugkombination unter den mehreren Fahrzeugeinheiten enthält, und wobei das Definieren der Referenzsteuereingabe ferner derart ist, dass, wenn die tatsächliche Steuereingabe mit der Referenzsteuereingabe übereinstimmt, die Längskraft der Fahrzeugkombination gemäß dem voreingestellten Aufteilungsverhältnis unter den mehreren Fahrzeugeinheiten aufgeteilt wird.

5. Verfahren nach einem der vorhergehenden Ansprüche, wobei die Vielzahl von Aktuatoren eine oder mehrere elektrische Maschinen und eine oder mehrere Betriebsbremsen enthält.

6. Verfahren nach Anspruch 5, wobei die eine oder die mehreren elektrischen Maschinen sowohl die Antriebsals auch die Bremskraft erzeugen können.

7. Steuerung zur Steuerungszuordnung in einer Fahrzeugkombination, einschließlich mehrerer Fahrzeugeinheiten und einer Vielzahl von Aktuatoren, die dazu konfiguriert sind, Antriebs- und/oder Bremskräfte zu erzeugen, wobei die Vielzahl von Aktuatoren unter den mehreren Fahrzeugeinheiten verteilt sind und die Steuerung einen Verarbeitungsschaltkreis umfasst, der dazu konfiguriert ist, die Steuerung zu Folgendem zu veranlassen:

- Empfangen von globalen Kräften ($v$) für die Fahrzeugkombination als Ganzes;

- Empfangen mindestens einer Angabe der Funktionen der Vielzahl von Aktuatoren zum Erzeugen einer Antriebs- und/oder Bremskraft;

- Lösen eines Steuerungszuordnungsproblems bei einem Versuch, eine tatsächliche Steuereingabe ($u$) für die Vielzahl von Aktuatoren basierend auf den angeforderten globalen Kräften zu finden, einschließlich eines Versuchs, eine Differenz zwischen der tatsächlichen Steuereingabe und einer Referenzsteuereingabe ($u_{ref}$) für die Vielzahl von Aktuatoren zu minimieren, und

- Steuern der Vielzahl von Aktuatoren basierend auf der tatsächlichen Steuereingabe, so dass jede Fahrzeugeinheit zu einer Längskraft der Fahrzeugkombination beiträgt, die in den angeforderten globalen Kräften angegeben ist, wobei die Steuerung durch den Verarbeitungsschaltkreis gekennzeichnet ist, der ferner derart konfiguriert ist, dass er die Steuerung dazu veranlasst, die Referenzsteuereingabe derart zu definieren, dass:

a) die Funktionen der Vielzahl von Aktuatoren zum Erzeugen einer Antriebs- und/oder Bremskraft berücksichtigt werden, und

b) wenn die tatsächliche Steuereingabe mit der Referenzsteuereingabe übereinstimmt, der Beitrag zur Längskraft von einer der Fahrzeugeinheiten nicht dem Beitrag zur Längskraft von einer anderen der Fahrzeugeinheiten entgegenwirkt.

**8.** Steuerung nach Anspruch 7, wobei der Verarbeitungsschaltkreis ferner dazu konfiguriert ist, die Steuerung dazu zu veranlassen, ein Verfahren nach einem der Ansprüche 2 bis 6 durchzuführen.

**9.** Fahrzeugeinheit, die dazu konfiguriert ist, einen Teil einer Fahrzeugkombination zu bilden, einschließlich mehrerer Fahrzeugeinheiten und einer Vielzahl von Aktuatoren, die dazu konfiguriert sind, Antriebs- und/oder Bremskräfte zu erzeugen, wobei die Vielzahl von Aktuatoren unter den mehreren Fahrzeugeinheiten verteilt sind, und wobei die Fahrzeugeinheit eine Steuerung nach Anspruch 7 oder 8 umfasst.

**10.** Fahrzeugkombination, einschließlich mehrerer Fahrzeugeinheiten und einer Vielzahl von Aktuatoren, die dazu konfiguriert sind, Antriebs- und/oder Bremskräfte zu erzeugen, wobei die Vielzahl von Aktuatoren unter den mehreren Fahrzeugeinheiten verteilt sind, und wobei die Fahrzeugkombination eine Steuerung nach Anspruch 7 oder 8 umfasst.

**11.** Fahrzeugkombination nach Anspruch 10, wobei die Vielzahl von Aktuatoren eine oder mehrere elektrische Maschinen und eine oder mehrere Betriebsbremsen enthält.

**12.** Fahrzeugkombination nach Anspruch 11, wobei die eine oder die mehreren elektrischen Maschinen sowohl die Antriebs- als auch die Bremskraft erzeugen können.

**13.** Computerprogramm zur Steuerungszuordnung in einer Fahrzeugkombination, einschließlich mehrerer Fahrzeugeinheiten und einer Vielzahl von Aktuatoren, die dazu konfiguriert sind, Antriebs- und/oder Bremskräfte zu erzeugen, wobei die Vielzahl von Aktuatoren unter den mehreren Fahrzeugeinheiten verteilt sind, wobei das Computerprogramm Computercode umfasst, der, wenn er im Verarbeitungsschaltkreis einer Steuerung der Fahrzeugkombination ausgeführt wird, die Steuerung zu Folgendem veranlasst:

- Empfangen von angeforderten globalen Kräften (v) für die Fahrzeugkombination als Ganzes;
- Empfangen mindestens einer Angabe der Funktionen der Vielzahl von Aktuatoren zum Erzeugen einer Antriebs- und/oder Bremskraft;
- Lösen eines Steuerungszuordnungsproblems bei einem Versuch, eine tatsächliche Steuereingabe ($u$) für die Vielzahl von Aktuatoren basierend auf den angeforderten globalen Kräften zu finden, einschließlich eines Versuchs, eine Differenz zwischen der tatsächlichen Steuereingabe und einer Referenzsteuereingabe ($u_{ref}$) für die Vielzahl von Aktuatoren zu minimieren, und
- Steuern der Vielzahl von Aktuatoren basierend auf der tatsächlichen Steuereingabe, so dass jede Fahrzeugeinheit zu einer Längskraft der Fahrzeugkombination beiträgt, die in den angeforderten globalen Kräften angegeben ist,

wobei das Computerprogramm durch den Verarbeitungsschaltkreis gekennzeichnet ist, der ferner derart konfiguriert ist, dass er die Steuerung dazu veranlasst, die Referenzsteuereingabe derart zu definieren, dass:

a) die Funktionen der Vielzahl von Aktuatoren zum Erzeugen einer Antriebs- und/oder Bremskraft berücksichtigt werden, und
b) wenn die tatsächliche Steuereingabe mit der Referenzsteuereingabe übereinstimmt, der Beitrag zur Längskraft von einer der Fahrzeugeinheiten nicht dem Beitrag zur Längskraft von einer anderen der Fahrzeugeinheiten entgegenwirkt.

**14.** Computerprogramm nach Anspruch 13, wobei der Computercode ferner derart ist, dass, wenn er im Verarbeitungsschaltkreis der Steuerung ausgeführt wird, die Steuerung dazu veranlasst, ein Verfahren nach einem der Ansprüche 2 bis 6 durchzuführen.

**15.** Computerprogrammprodukt, das ein Computerprogramm nach Anspruch 13 oder 14 und ein computerlesbares Speichermedium umfasst, auf dem das Computerprogramm gespeichert ist.

**Revendications**

**1.** Procédé d'attribution de commande dans une combinaison de véhicules comprenant de multiples unités de véhicules et une pluralité d'actionneurs configurés pour générer des forces de propulsion et/ou de freinage, la pluralité d'actionneurs étant répartis entre les multiples unités de véhicules, le procédé comprenant :

- la réception des forces globales demandées ($v$) pour l'ensemble de véhicules ;
- la résolution d'un problème d'attribution de commande dans une tentative de trouver une entrée de commande réelle ($u$) pour la pluralité d'actionneurs sur la base des forces globales demandées, y compris une tentative de minimiser une différence entre l'entrée de commande réelle et une entrée de commande de référence ($u_{ref}$) pour la pluralité d'actionneurs, et
- la commande de la pluralité d'actionneurs sur la base de l'entrée de commande réelle de telle sorte que chaque unité embarquée contribue à une force longitudinale de l'ensemble de véhicules indiquée dans les forces globales demandées,

le procédé étant **caractérisé par** la définition supplémentaire de l'entrée de commande de référence de telle sorte que :

    a) les capacités de la pluralité d'actionneurs à générer une force de propulsion et/ou de freinage soient prises en compte et,
    b) si l'entrée de commande réelle correspond à l'entrée de commande de référence, la contribution de l'une des unités de véhicules à la force longitudinale ne contrebalance pas la contribution de l'une quelconque des autres unités de véhicules à la force longitudinale.

2.    Procédé selon la revendication 1, dans lequel l'entrée de commande de référence est définie de telle sorte que, en outre, si l'entrée de commande réelle correspond à l'entrée de commande de référence, il n'y a pas de freinage et d'accélération simultanés d'une même unité de véhicule parmi les multiples unités de véhicules.

3.    Procédé selon la revendication 1 ou 2, dans lequel la définition de l'entrée de commande de référence est en outre telle que si l'entrée de commande réelle correspond à l'entrée de commande de référence, la force longitudinale de la combinaison de véhicules soit répartie aussi uniformément que possible entre les multiples unités de véhicules soumises aux capacités des actionneurs.

4.    Procédé selon l'une quelconque des revendications 1 à 3, le procédé comprenant en outre la définition d'un rapport de division prédéterminé de la force longitudinale de la combinaison de véhicules parmi les multiples unités de véhicules, et la définition de l'entrée de commande de référence étant en outre telle que si l'entrée de commande réelle correspond à l'entrée de commande de référence, la force longitudinale de la combinaison de véhicules soit divisée entre les multiples unités de véhicules conformément au rapport de division prédéterminé.

5.    Procédé selon l'une quelconque des revendications précédentes, dans lequel la pluralité d'actionneurs comprend une ou plusieurs machines électriques et un ou plusieurs freins de service.

6.    Procédé selon la revendication 5, dans lequel la ou les machines électriques sont capables de générer à la fois une force de propulsion et une force de freinage.

7.    Contrôleur pour l'attribution de commande dans une combinaison de véhicules comprenant de multiples unités de véhicules et une pluralité d'actionneurs configurés pour générer des forces de propulsion et/ou de freinage, la pluralité d'actionneurs étant distribuée parmi les multiples unités de véhicules, et le contrôleur comprenant un circuit de traitement configuré pour amener le contrôleur à :

- recevoir les forces globales demandées ($v$) pour l'ensemble de véhicules ;
- recevoir au moins une indication des capacités de la pluralité d'actionneurs à générer une force de propulsion et/ou de freinage ;
- résoudre un problème d'attribution de commande dans une tentative de trouver une entrée de commande réelle ($u$) pour la pluralité d'actionneurs sur la base des forces globales demandées, y compris une tentative de minimiser une différence entre l'entrée de commande réelle et une entrée de commande de référence ($u_{ref}$) pour la pluralité d'actionneurs, et
- commander la pluralité d'actionneurs sur la base de l'entrée de commande réelle de telle sorte que chaque unité embarquée contribue à une force longitudinale de l'ensemble de véhicules indiquée dans les forces globales demandées,

le contrôleur étant **caractérisé en ce que** les circuits de traitement sont en outre configurés de telle sorte qu'ils amènent le contrôleur à définir l'entrée de commande de référence de telle sorte que :

a) les capacités de la pluralité d'actionneurs à générer une force de propulsion et/ou de freinage soient prises en compte et,
b) si l'entrée de commande réelle correspond à l'entrée de commande de référence, la contribution de l'une des unités de véhicules sur le véhicule à la force longitudinale ne contrebalance pas la contribution de l'une quelconque des autres unités de véhicules à la force longitudinale.

8. Contrôleur selon la revendication 7, dans lequel ledit circuit de traitement est en outre configuré pour amener le contrôleur à exécuter un procédé selon l'une quelconque des revendications 2 à 6.

9. Unité de véhicule configurée pour faire partie d'une combinaison de véhicules comprenant de multiples unités de véhicules et une pluralité d'actionneurs configurés pour générer des forces de propulsion et/ou de freinage, la pluralité d'actionneurs étant répartis parmi les multiples unités de véhicules, et l'unité de véhicule comprenant un contrôleur selon la revendication 7 ou 8.

10. Combinaison de véhicule comprenant de multiples unités de véhicules et une pluralité d'actionneurs configurés pour générer des forces de propulsion et/ou de freinage, la pluralité d'actionneurs étant répartis parmi les multiples unités de véhicules, et la combinaison de véhicule comprenant un contrôleur selon la revendication 7 ou 8.

11. Combinaison de véhicules selon la revendication 10, dans laquelle la pluralité d'actionneurs comprend une ou plusieurs machines électriques et un ou plusieurs freins de service.

12. Combinaison de véhicules selon la revendication 11, dans laquelle la ou les machines électriques sont capables de générer à la fois une force de propulsion et une force de freinage.

13. Programme informatique d'attribution de commande dans une combinaison de véhicules comprenant de multiples unités de véhicules et une pluralité d'actionneurs configurés pour générer des forces de propulsion et/ou de freinage, la pluralité d'actionneurs étant répartis entre les multiples unités de véhicules, le programme informatique comprenant un code informatique qui, lorsqu'il est exécuté sur des circuits de traitement d'un contrôleur de la combinaison de véhicules, amène le contrôleur à :

- recevoir les forces globales demandées (v) pour l'ensemble de véhicules ;
- recevoir au moins une indication des capacités de la pluralité d'actionneurs à générer une force de propulsion et/ou de freinage ;
- résoudre un problème d'attribution de commande dans une tentative de trouver une entrée de commande réelle ($u$) pour la pluralité d'actionneurs sur la base des forces globales demandées, y compris une tentative de minimiser une différence entre l'entrée de commande réelle et une entrée de commande de référence ($u_{ref}$) pour la pluralité d'actionneurs, et
- commander la pluralité d'actionneurs sur la base de l'entrée de commande réelle de telle sorte que chaque unité embarquée contribue à une force longitudinale de l'ensemble de véhicules indiquée dans les forces globales demandées,

le programme informatique étant **caractérisé en ce que** les circuits de traitement sont en outre configurés de telle sorte qu'ils amènent le contrôleur à définir l'entrée de commande de référence de manière à ce que :

a) les capacités de la pluralité d'actionneurs à générer une force de propulsion et/ou de freinage soient prises en compte et,
b) si l'entrée de commande réelle correspond à l'entrée de commande de référence, la contribution de l'une des unités de véhicules à la force longitudinale ne contrebalance pas la contribution de l'une quelconque des autres unités de véhicules à la force longitudinale.

14. Programme informatique selon la revendication 13, dans lequel le code informatique est en outre tel que, lorsqu'il est exécuté sur ledit circuit de traitement du contrôleur, il amène le contrôleur à exécuter un procédé selon l'une quelconque des revendications 2 à 6.

15. Produit de programme informatique comprenant un programme informatique selon la revendication 13 ou 14, et un support de stockage lisible par ordinateur sur lequel le programme informatique est stocké.

Fig. 1A

Fig. 1B

**Fig. 1C**

**Fig. 2**

**Fig. 3A**

300

S301 — Receive virtual control input $v$

S302 — Receive actuator limits $\underline{u}$, $\bar{u}$ and calculate force reference $u_{ref}$ based on limits

S303 — Solve control allocation problem to find true control input $u$ based on virtual control input and force reference

S304 — Control actuators of vehicle units based on true control input

*Fig. 3B*

400

| 410 | 420 |
| 430 | 440 |

450

*Fig. 4A*

400

| 401 | 402 |
| 403 | 404 |

452

*Fig. 4B*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102016220905 A1